# EUROPEAN PATENT SPECIFICATION

(11) **EP 3 016 264 B1**
(45) Date of publication and mention of the grant of the patent: **01.01.2025**
(21) Application number: 14817173.9
(22) Date of filing: 22.01.2014
(51) Int. Cl.: H02N 1/04

(54) **SLIDING FRICTION POWER GENERATOR, POWER GENERATION METHOD, AND VECTOR DISPLACEMENT SENSOR**
GLEITENDER REIBUNGSSTROMGENERATOR, STROMERZEUGUNGSVERFAHREN UND VEKTORVERSCHIEBUNGSSENSOR
GÉNÉRATEUR DE COURANT PAR FRICTION DE GLISSEMENT, PROCÉDÉ DE GÉNÉRATION DE COURANT ET CAPTEUR DE DÉPLACEMENT DE VECTEUR

(30) Priority: 25.06.2013 CN 201310256081
(43) Date of publication of application: 04.05.2016
(73) Proprietor: Beijing Institute of Nanoenergy and Nanosystems, Beijing 100083 (CN)
(72) Inventor: WANG, Zhonglin, Beijing 100190 (CN); YANG, Ya, Beijing 100190 (CN); ZHANG, Hulin, Beijing 100190 (CN)
(74) Representative: Noble, Nicholas
(86) International application number: PCT/CN2014/071085
(87) International publication number: WO 2014/206077

(56) References cited:
- WO-A1-2013/170651
- CN-A- 102 342 011
- CN-A- 102 684 546
- CN-U- 202 818 150
- DE-A1- 4 429 029
- DE-A1- 4 429 029
- JP-A- 2010 198 991
- LONG LIN ET AL: "Segmentally Structured Disk Triboelectric Nanogenerator for Harvesting Rotational Mechanical Energy", NANO LETTERS,, vol. 13, no. 6, 1 January 2013 (2013-01-01), pages 2916 - 2923, XP002754876

## Description

### BACKGROUND

### Technical Field

The present disclosure relates to an electric generator, and particularly, to a sliding-mode triboelectric generator and a method of power generation, which convert mechanical energy into electrical energy, and a vector displacement sensor in which the sliding-mode triboelectric generator is applied.

### Description of the Related Art

It is operational principle of a sliding-mode triboelectric generator that it is on account of surface charge transfer due to friction between two different friction materials. However, all the sliding-mode triboelectric generators which have been reported adopt deposition of conductive metal on surface of the friction film material as a layer of electrode, so as to output electrical energy. The sliding-mode triboelectric generator of such configuration is complicated in structure, which leads to increment of manufacturing cost of components. In addition, conventional sliding-mode triboelectric generator has a demand that a thickness of the triboelectric material should be within a range of small-scale thickness, a typically thickness being of less than 100 microns. Due to thin thicknesses of the triboelectric materials, two kinds of triboelectric materials are greatly easy to be destroyed in the course of the sliding friction, which causes abnormal operations of the generator. Accordingly, this configuration of the existing sliding-mode triboelectric generator greatly hinders development and application of such sliding-mode triboelectric generator.

DE4429029 discloses a frictional generator that has a flat conductor and a flat insulator. In mutual contact, the conductor and insulator move relative to one another, generating static electricity by friction. This energy can be removed between the conductor and a second, pref. earth reference conductor. The generator has a band or mat form, the conductor and the insulator being coaxial or in parallel planes. The electrical conductor and the insulator may both be surrounded by an electrically conductive screen. Also disclosed are a light source, and an item of clothing including both the light source and the generator.

Nano Letters, vol. 13 no. 6, pages 2916 to 2923 by Long Lin et al is directed to Segmentally structured disk triboelectric nanogenerator for harvesting rotational mechanical energy.

CN102684546 discloses a friction generator comprising two electrodes; the electrode comprising a macromolecular polymer insulating layer; a micro-nano concave-convex structure arranged on one side surface of the macromolecular polymer insulating layer, and a metal film arranged on the other side surface.

### SUMMARY

The present disclosure provides a single electrode type sliding-mode triboelectric generator, which is simple in configuration and is capable of converting mechanical energy from external force into electrical energy.

In order to achieve the abovementioned object, the present invention provides a sliding-mode triboelectric generator as defined in claim 1, and a method of generating power as defined in claim 23. :

Preferably, the electrode layer is connected, via a load, to be grounded or to an isopotential circuit.

Preferably, the electrode layer is electrically connected, via an external circuit that is connected in parallel with a load, to the isopotential.

Preferably, the upper surface of the electrode layer is provided to be in contact with the lower surface of the friction layer.

Preferably, the electrode layer does not come into contact with the friction layer when no external force is applied, while, the upper surface of the electrode layer comes into contact with the lower surface of the friction layer when an external force is applied.

Preferably, material for the lower surface of the friction layer is selected from insulator material.

Preferably, the insulator material is selected from polymeric material.

Preferably, the polymeric material is selected from PMMA, nylon, polyvinyl alcohol, polyester, polyisobutylene, polyurethane sponge, polyethylene terephthalate, polyvinyl butyral, polychloroprene, natural rubber, polyacrylonitrile, poly phenol carbonate, polyetherchloride, polyvinylidene chloride, polystyrene, polyethylene, polypropylene, polyimide, polyvinyl chloride, polydimethylsiloxane, polytetrafluoroethylene.

Preferably, material for the upper surface of the electrode layer is selected from metal, indium tin oxide, or organic conductor.

Preferably, the metal is selected from gold, silver, platinum, aluminum, nickel, copper, titanium, chromium or selenium, and alloy formed by the above; and, the organic conductor is selected from polypyrrole, polyphenyl thioether, poly phthalocyanine, polyaniline, and/or polythiophene.

Preferably, the electrode layer comprises film material.

Preferably, the electrode layer has a thickness of 10nm-5mm.

Preferably, the upper surface of the electrode layer and/or the lower surface of the friction layer are/is disturbed fully or partially with microstructure with a magnitude of nanometer, micrometer, or submicrometer, the microstructure comprising a structure of nanowire, nanotube, nanoparticle, nanorod, nano flower, nano groove, micron groove, nano cone, micron cone, nanosphere and micronsphere, and an array thereof, or, dots or coatings of nano materials.

Preferably, the upper surface of the electrode layer and/or the lower surface of the friction layer are/is chemically modified.

Preferably, in the upper surface of the electrode layer and/or the lower surface of the friction layer, a functional group which is prone to lose electrons is introduced into a surface of a material having a positive rating in a triboelectric series, or a functional group which is prone to gain electrons is introduced into a surface of a material having a negative rating in the triboelectric series.

Preferably, in the upper surface of the electrode layer and/or the lower surface of the friction layer, positive charges are introduced into a surface of a material having the positive rating, and, negative charges are introduced into a surface of a material having the negative rating.

Preferably, the upper surface of the electrode layer is a flat surface or a curved surface; and/or,
the lower surface of the friction layer is a flat surface or a curved surface.

Preferably, the upper surface of the electrode layer and the lower surface of the friction layer are surfaces which are complemented with each other.

Preferably, the lower surface of the friction layer is an uneven surface with concave-convex structure, and, the upper surface of the electrode layer is an uneven surface with concave-convex structure.

Preferably, the electrode layer and/or the friction layer are/is of soft material or rigid material.

Preferably, the electrode layer and/or the friction layer are/is of elastic material.

Preferably, the generator further comprises a substrate on which the electrode layer is disposed.

Preferably, the electrode layer is formed of a plurality of sub-electrodes, each of the sub-electrodes is electrically connected to the isopotential, and upper surfaces of the plurality of sub-electrodes form the upper surface of the electrode layer; an electrical signal is outputted between the sub-electrodes and the isopotential when a relative sliding occurs, under the action of an external force, between the upper surfaces of the sub-electrodes and the lower surface of the friction layer while the friction area changes in the course of the sliding.

Preferably, the lower surface of the friction layer is in contact with and rubs against the upper surfaces of two adjacent ones of the sub-electrodes asynchronously.

Preferably, the sub-electrode has a shape of strip or square.

Preferably, the plurality of sub-electrodes is arranged in a preset pattern.

Preferably, the friction layer is formed of a plurality of friction units, the lower surfaces of the plurality of friction units forming the lower surface of the friction layer.

Correspondingly, the present disclosure also provides a vector displacement sensor comprising a generator in which an electrode layer is formed of a plurality of sub-electrodes, wherein,
a detection device is connected between each of the sub-electrodes and the isopotential and is for detecting the electrical signal;
when the sliding friction occurs between the lower surface of the friction layer and the upper surface of the sub-electrodes while the friction area changes, a position of the friction layer is determinable in accordance with position of the detection device by which the electrical signal is detected, or, a sliding distance, a sliding direction or a sliding speed of the friction layer is determinable in accordance with position of the detection device by which the electrical signal is detected successively.

Preferably, the detection device is an electric current or electric voltage detecting device, and the electrical signal is an electric current or electric voltage signal; or
the detection device is a light-emitting element or a sounder element, and a light signal or a sound signal is outputted when the electrical signal is detected by the light-emitting element or the sounder element.

Preferably, it further comprises a divider resistance between each of the sub-electrodes and the isopotential, the divider resistance being connected in parallel or in series with the detection device.

Preferably, the electric generator comprises sixteen sub-electrodes, of which four constitute one group and which form a cross configuration in four directions, and, the four sub-electrodes in each group are arranged in parallel and equidistantly.

Preferably, the sixteen sub-electrodes are of aluminum electrode strips, each having a width of 10mm and a length of 3cm, and a distance between the electrode strips is 2mm.

Compared with the prior art, the present disclosure has the following advantageous.
1. The sliding-mode triboelectric generator of the present disclosure is based on a single electrode. It is only needed to adopt one triboelectric material and one conductive material (e.g., polymer and metal materials). An electric generator is fabricated by electrically connecting the conductive material to an isopotential, without plating of metal material onto a surface of the triboelectric material. Output of electrical energy to outside will be achieved by continuous contacts and separations between the triboelectric material and the conductive material. The present disclosure not only simplifies configuration of the generator, but also prolongs serving life of the generator by adopting material for the friction layer of greater thickness.
2. In the sliding-mode triboelectric generator of the present disclosure, the electrode layer is required to be electrically connected to the isopotential while no connection is required for the friction layer. When a relatively sliding friction occurs between the friction layer and the electrode layer while a friction area changes in the course of the sliding, power is supplied to the load connected between the electrode layer and the isopotential. The electric generator of such configuration is widely applicable on moving objects, to convert the relative friction in the course of the movement into electrical energy. For example, collection of mechanical energy from the friction between the automobile tire and the road surface, or applications in fields including touch screen, etc..
3. In the sliding-mode triboelectric generator of the present disclosure, these components may use soft materials or elastic materials. Therefore, it can be combined with flexible elements in use.
4. The present disclosure provides a vector displacement sensor where the sliding-mode triboelectric generator is used. It is a self-driven sensor and adopts an electric generator where the electrode layer is consisted of a plurality of sub-electrodes. When the friction layer slides or moves on the sub-electrodes, the detection device connected between the sub-electrodes and the isopotential detects the electrical signal. No power supply is required for the sensor, it relies on the electrical signals created from the sliding frictions between the sub-electrodes which are triggered successively and the friction layer in the course of movement of the object, to track a moving direction, a moving distance and a moving speed of the moving object, and to fix a position on the object. The vector displacement sensor of the present disclosure does not require any additional power supplies, and it either is applicable in small-sized device, for example, touch screen, or is especially suitable for environment where no replacement of power supply is required.

### BRIEF DESCRIPTION OF THE DRAWINGS

These and/or other objects, features and advantages of the present disclosure will become apparent and more readily appreciated from those shown in the accompanying drawings. In these figures, the same reference signs denote the same elements. These figures are not intended to be drawn to scale, only for showing the subject matter of the present disclosure.
Fig. 1 is a typically structural schematic view of a sliding-mode triboelectric generator according to the present invention;
Fig. 2 is a schematic view of electricity generation principle of a sliding-mode triboelectric generator according to the present invention;
Fig. 3 is a structural schematic view of a generator in which an electrode layer is disposed on a substrate;
Fig. 4 is a structural schematic view of a generator in which both an upper surface of an electrode layer and a lower surface of a friction layer are of curved surfaces;
Fig. 5 and Fig. 6 are structural schematic views of a generator in which an upper surface of an electrode layer and a lower surface of a friction layer are of uneven surfaces with concave-convex structure;
Fig. 7 and Fig. 8 are structural schematic views of a generator in which an electrode layer is consisted of a plurality of sub-electrodes; and
Figs. 9-11 are schematic diagrams of a vector displacement sensor according to an embodiment.

### DETAILED DESCRIPTION OF THE EMBODIMENTS

Furthermore, exemplary embodiments of the present disclosure will be described hereinafter in detail with reference to the attached drawings. For clear purposes, the attached drawings are only schematic and should not be construed as being limited to the embodiments set forth herein.

Conventional sliding-mode triboelectric generator is provided to include two kinds of friction materials and convert mechanical energy into electrical energy, for power generation, by means of transfer of surface charges through a relative friction between the friction materials. This configuration requires manufacture of a layer of conductive material, as an electrode layer, on a friction material surface, which not only leads to complicated structure of the generator, but also needs a friction layer with a less thickness. As a result, the two kinds of triboelectric materials are greatly easy to be destroyed in the course of the sliding friction, which causes abnormal operations of the generator. The present disclosure provides a single electrode type sliding-mode triboelectric generator, and its technical solution is to power a load or an external circuit connected between the electrode layer and the isopotential, depending on transfer of surface charges due to a relative friction between a conductive material and a triboelectric material that have a difference in triboelectric series, and on electrical connection of the conductive material to the isopotential.

Here, the term "triboelectric series" means the order of materials for reflecting degrees of their attraction to charge. At the moment when two materials rub against each other, negative charges on the friction surface are transferred from the surface of one material that has a relatively positive rating in triboelectric series to the surface of the other material that has a relatively negative rating in triboelectric series. For example, in case that polymer material Teflon is contact with metal material aluminium foil, aluminium foil is positively charged, namely, has a relatively weaker ability to gain electrons, while, polymer materialTeflonis negatively charged, namely, has a relatively stronger ability to gain electrons.In case thatpolymer materialnylon is contact with aluminium foil, polymer material nylon is positively charged, namely, has a relatively weaker ability to gain electrons, while, aluminium foilis negatively charged, namely, has a relatively stronger ability to gain electrons.So far, there is no uniform theory that can interpret completely mechanism of the charge transfer. It is generally recognized that such charge transfer is related with the surface work function of a material, and the charge transfer is achieved by transfer of electrons or ions on the contact surfaces. It should be explained thatthetriboelectric series is only an empirical statistical result, that is, the greater is a difference in the triboelectric series between two kinds of materials, the greater is a probability that amount of the charges generated during their contact conforms to their orders in the triboelectric series. Moreover, actual outcomes will be further affected by many factors, for example, surface roughness of material, environment humidity, existence of a relative friction or not, etc..

Here, the term "contact charges" means that electric charges on surfaces of two kinds of materials, which have a difference in the triboelectric series therebetween, after the contact and the friction between the two kinds of materials. It is generally recognized that the contact charges are only distributed on surfaces of the materials, with a maximum depth of about 10 nanometers. It should be explained that a symbol for the contact charge is that for net charge, that is to say, negative charge accumulation regions may appear on some parts of surface of a material carrying with positive contact charges, while the symbol for net charges on the whole surface thereof is positive.

Specific embodiments of sliding-mode triboelectric generator according to the present disclosure will be described completely and clearly hereinafter in detail with reference to the attached drawings.

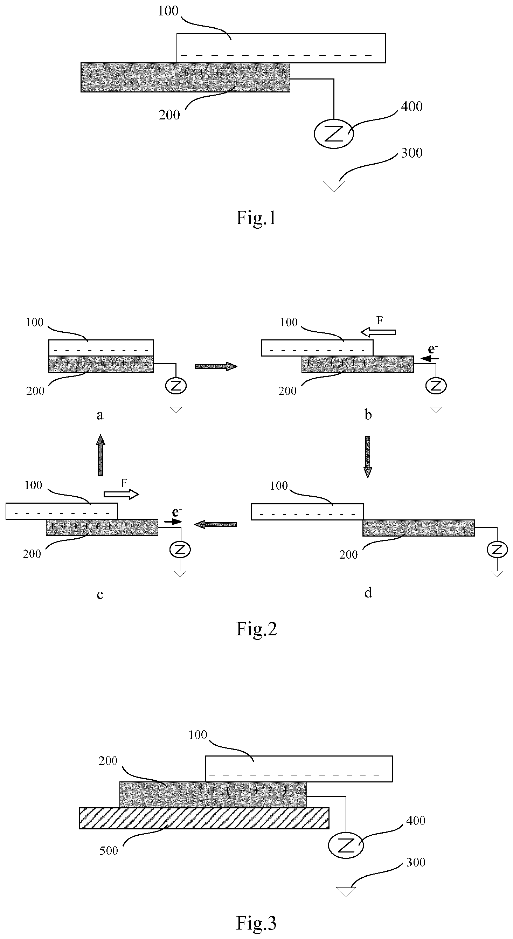

Fig. 1 shows a typical structure of a sliding-mode triboelectric generator according to an embodiment. The generator comprises a friction layer 100 and an electrode layer 200, the electrode layer 200 being electrically connected to an isopotential 300. A lower surface of the friction layer 100 faces to an upper surface of the electrode layer 200. An electrical signal is outputted between the electrode layer 200 and the isopotential 300 when a relatively sliding friction occurs, under the action of an external force, between the upper surface of the electrode layer 200 and the lower surface of the friction layer 100 while a friction area changes in the course of the sliding. If a load or an external circuit 400 is connected between the electrode layer 200 and the isopotential 300, a current will pass the load or the external circuit 400.

There is a difference in triboelectric series between material for the friction layer 100 and material for the electrode layer 200. When they are rubbed against each other under the action of an external force while the friction area changes, electrical power is supplied to the load or the external circuit 400 between the electrode layer 200 and the isopotential 300. Information including operating principle of the generator according to the present invention, and configurations and materials of these components of the generator, is introduced in detailed by taking the structure of figure 1 as an example.

Fig. 2 shows an operating principle of the generator according to the present invention. Since there is a difference in triboelectric series between the friction layer 100 and the electrode layer 200, namely, there is a difference in gaining of electrons between the two. Taken a case where the friction layer 100 has a relative strong electron-gaining ability and the electrode layer 200 is much more prone to loss electrons as an example, once the upper surface of the electrode layer 200 comes into contact with the lower surface of the friction layer 100, the lower surface of the friction layer 100 is filled with negative charges while the electrode layer 200 is filled with positive charges, as shown in section a of Fig. 2. Under the action of an external force F, a relatively sliding friction occurs between the friction layer 100 and the electrode layer 200 while a friction area changes, breaking a balance of charges in surfaces of the friction layer 100 and the electrode layer 200. Accordingly, electrons run from the isopotential 300 to the electrode layer 200, as shown in section b of Fig. 2. As a result, current passes through the load or the external circuit connected between the electrode layer 200 and the isopotential 300. After the friction layer 100 and the electrode layer 200 are separated completely from each other, a whole balance of positive and negative charges in the electrode layer 200 is achieved, no flow of electrons occurs, as shown in section c of Fig. 2. Under the action of an external force F in an opposing direction, a relatively sliding friction occurs between the friction layer 100 and the electrode layer 200, the lower surface of the friction layer 100 and the upper surface of the electrode layer 200 are rubbed against each other while the friction area changes, electrons run from the electrode layer 200 to the isopotential, so as to output current to the load or the external circuit connected between the electrode layer 200 and the isopotential, as shown in section d of Fig. 2. When the friction layer 100 is in contact fully with the electrode layer 200, a whole balance of positive and negative charges between the friction layer 100 and the electrode layer 200 is achieved, here, no flow of electrons in the external circuit occurs, as shown in section a of Fig. 2. No output of current will be observed between the electrode layer 200 and the isopotential. As the process is repeated, a pulse current is generated.

Conventional generator, which generates electrical signals relied on a friction between two kinds of triboelectric materials, requires deposition of the electrode layers on surfaces of these triboelectric materials, for transfer of charges by the two electrode layers when an electric potential is generated due to unbalance of the charges between the surfaces of the two triboelectric materials caused by the friction between the two triboelectric materials. Compared with the conventional sliding-mode triboelectric generator, the sliding-mode triboelectric generator according to the present invention is different in that, in the two kinds of triboelectric materials, one is selected from conductive material, and this conductive material is electrically connected to an isopotential (earth ground or isopotential), while the load or the external circuit is connected between the electrode layer and the isopotential. There is no need to provide an electrode layer on the upper surface of the friction layer. It not only simplifies the manufacturing process, but also is a widely-used sliding-mode triboelectric generator that converts mechanical energy into electrical energy. In addition, since there is no need to provide an electrode layer on the upper surface of the friction layer, there is no specific limitation on thickness of the friction layer, and the thickness is greater than 1mm, to ensure mechanical strength during the friction.

Seen from the abovementioned principle of electricity generation, a key for generation of output-enable electrical signals lies in the difference in triboelectric series between the friction layer 100 and the electrode layer 200. In the present invention, preferably, material for the friction layer is insulation material, while material for the electrode layer is electrically conductive material. In these insulation materials used as the friction layer, polymeric insulation material is preferred. All the following polymeric materials may be used for the friction layer 100 of the present invention, and they are presented in order of increments of the abilities of gaining the electrons as follows: polymethyl methacrylate, nylon, polyvinyl alcohol, polyester, polyisobutylene, polyurethane sponge, polyethylene terephthalate, polyvinyl butyral, polychloroprene, natural rubber, polyacrylonitrile, poly phenol carbonate, polyetherchloride, polyvinylidene chloride, polystyrene, polyethylene, polypropylene, polyimide, polyvinyl chloride, polydimethylsiloxane, and polytetrafluoroethylene. Due to reason of the length of the description, it is not exhaustive of all possible materials, and only some specific polymeric materials are listed here, for reference. Obviously, these specific materials do not become restrictive factors for the scope of the present invention, because those skilled in the art may easily choose other similar materials in accordance with triboelectric characteristics possessed by these materials, under the teachings from the present invention.

It is found in experiments that, the greater is the different between electron-gaining abilities of the material for the friction layer 100 and of the material for the electrode layer 200, the stronger is the electrical signal outputted by the sliding-mode triboelectric generator. Accordingly, on the basis of the above listed order together with simple comparative experiments, suitable polymeric material is selected as the friction layer 100, in order to achieve optimally electrical signal outputting performance.

The electrode layer 200 in the generator not only is used to provide one friction surface for being rubbed against the friction layer 100, but also is used as an electrode of the generator. If the electrical field created by charges in the surface of the friction layer 100 is unbalance, electrons is transferred from the isopotential 300 through the load or the external circuit, so as to balance the charges of the electrode layer 200. Accordingly, the upper surface of the electrode layer 200 is needed to be formed of conductive material, or the electrode layer 200 wholly be of conductive material. The conductive material will be selected from metal, indium tin oxide or organic conductor. The electrode layer 200 may be in a plate, a sheet, or a film having a thickness ranged of 10nm-5mm, preferably of 100nm-500µm. Commonly used metal includes gold, silver, platinum, aluminum, nickel, copper, titanium, chromium or selenium, and alloy of any of the above. The organic conductor generally comprises conductive polymers, including polypyrrole, polyphenylthioether, phthalocyanine compounds, polyaniline and/or polythiophene. The metallic film layer may be manufactured by conventional techniques including megnetron sputtering, evaporation, printing, etc..

For a generator in which the electrode layer 200 is made of film material, it may further comprises a substrate 500. Referring to Fig. 3, the electrode layer 200 is disposed on the substrate 500, to enhance mechanical strength of the electrode layer 200. Manufacture of the electrode layer onto the substrate may be implemented by conventional methods, such as, megnetron sputtering, evaporation, printing, etc.. Of course, if the electrode layer 200 has a relatively greater thickness, the substrate may also be included in the generator. The electrode layer is disposed on the substrate, which supports the electrode layer or isolates the electrode layer from other components.

There is no special requirements on material for the substrate 500, and it may be conductor, insulator or semiconductor, e.g., aluminium plate or silicon sheet. The substrate 500 may be either flexible substrates or rigid substrates, e.g., rubber or glass plate.

In order to improve output performance of the generator, it is preferably that lower surface of the friction layer 100, and/or upper surface of the electrode layer 200 are fully or particularly distributed with microstructures of nanometer, micrometer or submicrometer magnitudes, to increase effectively contacting areas between the friction layer 100 and the electrode layer 200, enhancing densities of surface charges of the two. The microstructures preferably comprise nanowires, nanotubes, nanoparticles, nanorods, nano flowers, nano trenches, micro trenches, nano cones, micro cones, nano spheres and spherical micron structures, and arrays of the abovementioned structures, particularly, nano arrays consisted of nanowires, nanotubes or nanorods. It may be linear, cubic or rectangular pyramid shaped arrays manufactured by means of photoetching, plasma etching, etc.. Sizes of each of the units in the array are ranged from nanometer magnitude to micrometer magnitude. The scope of the present invention should not be restricted by unit sizes and shapes of specifically micro- and nano-structures. Microstructures of the surface may be achieved by means of ornaments and coatings of nanomaterials on the lower surface of the friction layer 100 and/or the upper surface of the electrode layer 200.

In additional to the abovementioned manner of physical modification on surfaces of the friction layer (or the electrode layer), the surfaces, which are rubbed against each other, of the friction layer 100 and the electrode layer 200 may be chemically modified. It may further improve an amount of transfer of charges at the contacting moment, so as to increase density of the contacting charges and thus output power of the generator. There are two ways of the chemical modification as follows.

One way is that, for the friction layer 100 and the electrode layer 200 that are rubbed against each other, a functional group which is prone to lose electrons (namely, an electron-losing group) is introduced into a surface of a material having a positive rating in a triboelectric series, or a functional group which is prone to gain electrons (namely, an electron-gaining group) is introduced into a surface of a material having a negative rating in the triboelectric series. Either of them can further improve the amount of transfer of charges at the relatively sliding moment, so as to increase density of the contacting charges and thus output power of the generator. The electron-losing group comprises amino group, hydroxyl group, alkoxyl group, and so on. The electron-gaining group comprises acyl group, carboxyl group, nitrogroup, sulfonic acid group, and so on. Conventional methods including plasma surface modification may be adopted for introduction of the functional group. For example, the plasma may be from a mixture of oxygen and nitrogen under certain power, so as to introduce the amino group into the surface of the material for the friction layer.

Another way is that, positive charges are introduced into a surface of a material having a positive polarity, while negative charges are introduced into a surface of a material having a negative polarity. Specifically, it may be achieved by a chemical bonding method. For example, surface of a polydimethylsiloxane (PDMS) friction layermay be modified withtetraethoxysilane (TEOS) by a sol-gel method, to make it be in negative. Or, metal gold film layermay be modified with gold nanoparticles containing cetrimonium bromide (CTAB) by a gold-sulfur bonding, to make the whole friction layer positive since the cetrimonium bromide is positive ion. In accordance with electron-gaining/losing performances of the materials of the friction layer or the electrode layer and types of the surface chemical bonding thereof, those skilled in the art may choose suitable modification materials to be bonded, in order to achieve the object of the present invention. As a result, such modifications fall into the protective scope of the present invention.

It is mentioned in the present invention that the electrode layer 200 is electrically connected to the isopotential 300. The isopotential 300 may be earth ground or an isopotential circuit. The electrical connection may be a connection of the electrode layer 200 to the isopotential, via a load or an external circuit. Once the electrode layer and the friction layer are rubbed against each other such that an electrical potential is created since an unbalance occurs between the contacting charges on the electrode layer and the charges on the friction layer, charges in the isopotential 300 will be transferred to the electrode layer through the load or the external circuit, that is, the electric signal is applied on the load or the external circuit. In the present invention, the electrode layer 200 may be connected to the isopotential directly via a load, or, the electrode layer 200 may be connected to the isopotential 300 via an external circuit, or else, a load and an external circuit in parallel are connected between the electrode layer 200 and the isopotential 300. The external circuit may be a simple resistance or a relatively complicated circuit, and, there is no specific limitation here as long as it electrically connects the isopotential to the electrode layer and the resistance is not zero.

In the generator according to the present invention, the friction layer 100 or the electrode layer 200 may be of flexible material or of rigid material, since the sliding friction effect between the two will not be affected by rigidness or stiffness of the materials. If the friction surface is required to be maintained in a flat surface, it may be achieved by supporting of other components. Accordingly, those skilled in the art may choose rigidness or stiffness of material of the friction layer 100 and the electrode layer 200 in accordance with actual situation. The generator made of flexible material has the advantages of being deformable once a slight external force is exerted on the flexible, light and thin friction layer. This deformation will result in a relative displacement between the two friction layers, so as to output electric signal by the sliding friction. Use of the flexible material in the nanometer generator of the present invention will allow the generator to be widely applied in the fields of biology and medicine. In use, ultra-slim, flexible, elastic and/or transparent polymer material may be adopted, as the substrate, to perform package, so as to facilitate the use and increase the strength of the generator. Obviously, all the structure disclosed in the present invention may be manufactured from corresponding ultra-flexible and elastic material, to form the flexible sliding-mode triboelectric generator.

In a most typical structure of the generator according to the present invention, the lower surface of the friction layer 100 and the upper surface of the electrode layer 200 are provided to be in contact with each other. The two always maintains surface contact regardless of whether an external force is applied thereon. Under action of the external force, a relatively sliding friction, being tangent with the contact surface, between the friction layer 100 and the electrode layer 200 occurs therebetween. By controlling size of the lower surface of the friction layer 100 and the upper surface of the electrode layer 200 and amount of relative displacement therebetween, it is easy to achieve a change of the friction area during the relatively sliding friction.

In another embodiment of the present invention, the friction layer 100 and the electrode layer 200 may be configured to not be in contact with each other when no external force is exerted. The lower surface of the friction layer 100 and the upper surface of the electrode layer 200 will be in contact and a relatively sliding friction, being tangent with the contact surface, occurs therebetween when an external force is exerted, while, the friction layer 100 and the electrode layer 200 are completedly separated away from each other when no external force is exerted. This design will satisfy requirement of the interval generation, moreover, there will be both the contacting friction and the sliding friction in the process of the friction. In order for achieving this object, there are lots of technical means, including use of conventional distance-controlling components in the art. For example, components liking insulation springs are connected to the upper surface of the friction layer 100 and the lower surface of the electrode layer 200. However, it should be noted that the springs used should not restrict the relative sliding between the friction layer 100 and the electrode layer 200. The generator of such design may be used in combination with other products. The friction layer 100 and the electrode layer 200 may be connected respectively to two separated components in other product, to drive the generator to operate by utilizing interval contacting (or approaching) and relative sliding of the two components, so as to achieve the interval electric generation.

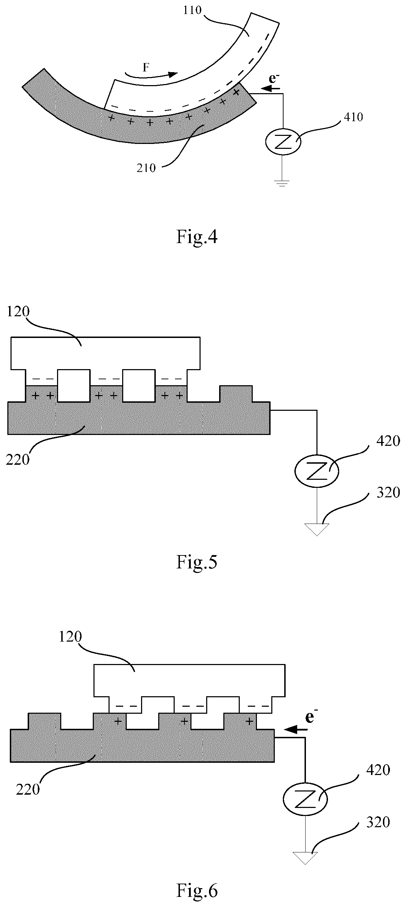

In the present invention, the lower surface of the friction layer 100 and the upper surface of the electrode layer 200 may be flat surface (see Fig. 1 and Fig. 3), or may be curved surface. The lower surface of the friction layer 100 and the upper surface of the electrode layer 200, having the curved surface structure, may also achieve a relatively sliding friction. Preferably, both the lower surface of the friction layer and the upper surface of the conductive layer have the flat surface or curved surface structure at the same time, ensuring tight contacting between the two. See Fig. 4, the friction layer 110 in whole has an arc-shaped structure, especially, the lower surface of the friction layer 110 has an arc shape; and, the electrode layer 210 in whole has an arc-shaped structure, especially, the upper surface of the electrode layer 210 has an arc shape. The electrode layer 210 is grounded via the load or the external circuit. When, under the action of an external force F, a relatively sliding friction, being tangent with the contact surface, occurs between the lower surface of the friction layer 110 and the upper surface of the electrode layer 210, negative charges flow into the electrode layer 210 through the load 410. Preferably, the lower surface of the friction layer 110 and the upper surface of the electrode layer 210 are curved surfaces which are complemented with each other, e.g., the curved surfaces have the same curvature, ensuring the greatest contacting area between the electrode layer 210 and the friction layer 110. When, under the action of an external force F, the relatively sliding friction, being tangent with the contact surface, occurs between the lower surface of the friction layer 110 and the upper surface of the electrode layer 210, higher output current will be generated.

In the embodiment shown in Fig. 1 and Fig. 4, the lower surface of the friction layer and the upper surface of the electrode layer are smooth and even surfaces. This structure requires a greater relatively sliding space between the friction layer and the electrode layer; moreover, in case that there is a greater difference between sizes of the friction layer and the electrode layer, it does not meet the requirement that the friction area between the friction layer and the electrode layer in the process of the friction is changing. Accordingly, in the generator according to the present invention, the lower surface of the friction layer and the upper surface of the electrode layer may be manufactured as uneven surfaces, and the lower surface of the friction layer does not come into contact completely with the upper surface of the electrode layer during a relative sliding between the friction layer and the electrode layer. See Fig. 5, the lower surface of the friction layer 120 is an uneven surface of convex-concave structure, and the upper surface of the electrode layer 220 is an uneven surface of convex-concave structure. The electrode layer is connected to the isopotential 320 via the load 420. When the friction layer 120 comes into contact with the electrode layer 220, due to the difference in triboelectric series between the friction layer and the electrode layer, negative charges are brought onto the lower surface of the friction layer and positive charges are brought onto the electrode layer, while, no current flows through the load once no relative sliding occurs between the friction layer and the electrode layer. When there occurs a relative sliding, under the action of an external force, between the friction layer 120 and the electrode layer 220, and the contacting area is changing, referring to Fig. 6, in order for balancing isopotential on the electrode layer, negative charges flow from the isopotential 300 through the load 520 to the electrode layer 220, to generate a pulse current. In this embodiment, it may be also applied in a case that the lower surface of the friction layer or the upper surface of the electrode layer 220 may be smaller ones, both the lower surface of the friction layer and the upper surface of the electrode layer are manufactured as uneven surfaces, change of the friction area may be obtained when the lower surface of the friction layer or the upper surface of the electrode layer are rubbed against each other under the action of the external force, such that mechanical energy of the external force will be converted into electrical energy.

In the present invention, it is preferably that sizes of the lower surface of the friction layer and of the upper surface of the electrode layer balance, which ensures that there achieves a greatest contacting area in the process of the relative sliding. More preferably, the lower surface of the friction layer and the upper surface of the electrode layer are the same both in area and in shape.

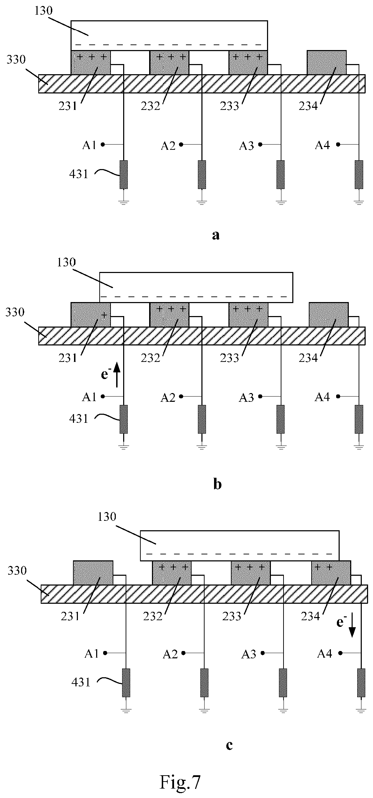

In other embodiments of the present invention, the electrode layer may be formed of a plurality of sub-electrodes each electrically connected to the isopotential, and upper surfaces of the plurality of sub-electrodes together form the upper surface of the electrode layer. When there occurs a relative sliding between the upper surfaces of the sub-electrodes and the lower surface of the friction layer, while the friction area is changing during the sliding, electrical signal is outputted between the sub-electrodes and the isopotential. If the friction area is changing during the sliding between the friction layer and one or more sub-electrode, electrical signal is outputted between the one or more sub-electrodes and the isopotential. Referring to Fig. 7, the electrode layer is formed of sub-electrodes 231, 232, 233 and 234, and these sub-electrodes may be disposed on a substrate 231. Upper surfaces of the sub-electrodes 231, 232, 233 and 234 together form the upper surface of the electrode layer. The sub-electrodes 231, 232, 233 and 234 are respectively grounded via a resistance 431. Output ends A1, A2, A3 and A4, for connection to load or detection device, are introduced between the sub-electrodes 231, 232, 233 and 234 and the isopotential. Here, the plurality of sub-electrodes is fixed by being disposed on the substrate. In other embodiments, the plurality of sub-electrodes are fixed in any other manners, for example, the sub-electrodes will be fixed by being inlaid within insulation grid.

Size of the friction layer 130 may be smaller than that of the sub-electrode or may be greater than that of the sub-electrode. Here, operating process of the generator will be introduced by reference with an example where size of the friction layer 130 is greater than that of the sub-electrode. Referring to sections a to c of Fig. 7, in an original state, the lower surface of the friction layer 130 comes into contact with and relatively slides with relative to the upper surfaces (namely, the upper surface of the electrode layer) of the sub-electrodes 231, 232 and 233, but does not come into contact with the sub-electrode 234. Since there is a difference in triboelectric series between material for the friction layer and material for the sub-electrodes, negative charges are filled onto the lower surface of the friction layer 130 and positive charges are filled onto the sub-electrodes 231, 232 and 233, as shown in section a of Fig. 7. When, under the action of an external force F, the friction layer 130 slides towards the right, relative to the electrode layer while a friction area between the friction layer 130 and the sub-electrode 231 is changing, electrons flow from earth ground to the sub-electrode 231, as shown in section b of Fig. 7, such that electrical signal will be detected by a detection device connected at the output end A1. The electrical current will be detected till the lower surface of the friction layer 130 is separated completedly away from the sub-electrode 231. During the course of this sliding, sliding frictions occur between the lower surface of the friction layer 130 and the upper surfaces of the sub-electrodes 232 and 233 simultaneously, however, there is no change of the friction area between the lower surface of the friction layer 130 and the upper surfaces of the sub-electrodes 232 and 233 due to greater size of the friction layer 130. Accordingly, no electrical signal will be detected at the output ends A2 and A3. The friction layer 130 continues to slide towards the right, relative to the electrode layer, when the lower surface of the friction layer 130 comes into contact with the upper surface of the sub-electrode 234 while the friction area changes in the course of the sliding, negative charges on the lower surface of the friction layer 130 repulse against negative charges on the upper surface of the sub-electrode 234, so that the negative charges on the sub-electrode 234 are flowed into earth ground through the resistance, as shown in section c of Fig. 7, as a result, electrical signal will be detected by the detection device at the output end A4. After the friction layer 130 continues to slide towards the right until the upper surface of the sub-electrode 234 is completely in contact with the lower surface of the friction layer 130, when the friction layer 130 continues to slide towards the right, there achieves a balance of charges on the sub-electrode 234 and there is no change of the friction area between the upper surface of the sub-electrode 234 and the lower surface of the friction layer 130, as a result, no electrical signal will be detected at the output end A4. In the embodiment, the substrate 330 can be semiconductor or insulator, preferably insulator, e.g., insulation substrates including organic glass, and so on. The generator of such configuration may be applied where the electrode layer is stationary while the friction layer is provided on a moving object, for electrical generation. For example, a plurality of sub-electrodes are arranged on the road surface, and each of the sub-electrodes is connected to the isopotential via the load, and the friction layer is disposed on vehicle. In the course of travel of the vehicle, the friction layer will have a relatively sliding friction with the sub-electrodes, so as to provide electrical signal for the load and so on. The generator according to the present embodiment may be applied in a touch screen technology, for position-setting of the touch and detection of the movement.

In the abovementioned embodiment, the sub-electrodes may be in any shape, preferably shapes and sizes of the plurality of sub-electrodes are the same. For example, they are in elongated rod shape or square shape. The plurality of sub-electrodes may be arranged in any manner, preferably be arranged in a preset pattern, which may be preset actually as required, e.g., square shape, rectangle shape, ring shape, cross shape, etc.. For example, they are arranged along four direction of a cross. In other embodiments, preferably, the lower surface of the friction layer is in contact with and rubs against the upper surfaces of two adjacent sub-electrodes asynchronously.

In the generator according to the present invention, the friction layer may also be formed of a plurality of friction units, respectively. The upper surface of the electrode layer is provided to be in contact with the lower surface of the friction unit and is movable relative thereto. The electrode layer is grounded via the resistances, and its operating principle is similar to that shown in Fig. 7, which will not be explained in detail here. The generator of such configuration may be applied where the friction layer is stationary while the electrode layer is provided on a moving object. For example, a plurality of friction units is arranged on the road surface, and the friction layer is disposed on vehicle and is connected to the isopotential via the load. In the course of travel of the vehicle, the electrode layer will have a relatively sliding friction with the friction units, so as to provide electrical signal for the load and so on.

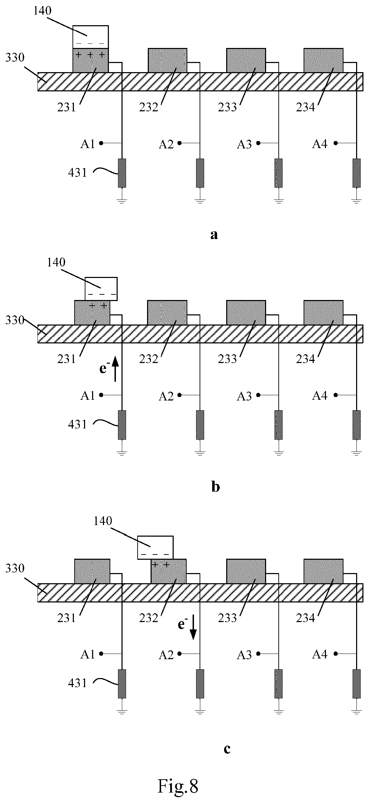

This generator where the electrode layer is formed of a plurality of sub-electrodes, in addition to be able to convert a mechanical energy generated from an external force into an electrical energy, will be applied in aspects of detections of sliding positions or sliding distance, etc. of an moving object. In practical applications, the electrode layer formed of a plurality of sub-electrodes is designed to be a stationary (or relatively stationary) surface while the friction layer is a moving object. The sub-electrodes each is grounded via a testing device. When the moving object is sliding over the surface of the friction layer, to create a relative friction between the sub-electrodes and the friction layer while changing the contacting area, the corresponding testing device connected to the sub-electrode will detect an electrical signal, by which a position of the moving object will be determined. In addition, in accordance with the testing signals from two successively testing devices, a moving direction of the moving object will be determined. Referring to Fig. 8, structure of the electrode layer is similar to that shown in Fig. 7. The moving object 140 (namely the friction layer) has a relatively smaller size, preferably, the moving object 330 will only come into contact with one sub-electrode. No electrical signal will be detected at the output end A1 when the moving object 140 is in contact with the sub-electrode 231 without a relative sliding (see section a of Fig. 8).An electrical signal will be detected at the output end A1 when the moving object 140 continues to move towards the right relative to the electrode layer while the contacting area is changing (see section b of Fig. 8), and, the electrical signal will be detected at the output end A1 till the moving object is fully separated from the sub-electrode 231. The moving object 140 continues to move towards the right. An electrical signal will be detected at the output end A2 after the moving object 140 is in contact with the sub-electrode 232 while the contacting area is changing, and, the electrical signal will not be detected until the contacting area between the moving object and the sub-electrode 232 is unchanged. Sliding position, sliding direction and sliding distance of the moving object will be determined in accordance with positions of the sub-electrodes corresponding to the detecting signals from the detection device connected at the output ends A1 and A2.Accordingly, the sliding-mode triboelectric generator of the present invention can accurately position moving direction and displacement distance of a moving object, which is a vector displacement sensor for sensing a moving object.

In accordance with operating principle of the sliding-mode triboelectric generator, the present invention provides a vector displacement sensor comprising a sliding-mode triboelectric generator as described above, in which an electrode layer is formed of a plurality of sub-electrodes. Wherein, a detection device is connected between each of said sub-electrodes and the isopotential and is for detecting the electrical signal. When the sliding friction occurs between the lower surface of the friction layer and the upper surfaces of the sub-electrodes while the friction area changes, position of the friction layer is determinable in accordance with position of the detection device by which the electrical signal is detected; or, sliding distance, sliding direction or sliding speed of the friction layer is determinable in accordance with positions of the detection devices by which the electrical signal is detected successively. The plurality of sub-electrodes will be arranged on a surface of the substrate, to fix the plurality of friction units. A detection device is connected between each sub-electrode and the isopotential. Once a current flows through between the sub-electrodes and the isopotential, due to one-by-one correspondence relationship between the sub-electrodes and the isopotential, the detection device will record a position of the sub-electrode which generates electrical signal, correspondingly, a position of the sub-electrode which has a sliding friction against the friction layer. Accordingly, position of the friction layer will be determined. Once the friction layer has a sliding friction against two sub-electrodes successively, electrical signals will be detected successively by two detection devices correspondingly. In accordance with positions of the detection device and distances and times where/when electrical signal are detected successively by the detection device, sliding distance, sliding direction and sliding speed of the friction layer are determined, so as to achieve sensing of the displacement of the moving object (the friction layer). A plurality of detection devices may form a detection system in which positional correspondence relationship between each detection device and the friction unit is preset.

In the vector displacement sensor of the present invention, the detection device can be an electric current or electric voltage detecting device, which is for outputting an electric current or electric voltage signal when a current flows between the sub-electrodes and the isopotential. In other embodiments, the detection device may be other lighting element or sounder element which generates signals including sound, light and so on when it is power supplied, such as, buzzer or LED light. The lighting element or the sounder element will output lighting signal or sounder signal when a current flows between the sub-electrodes and the isopotential.

The vector displacement sensor of the present invention may also be connected with a computer processing system. The computer system records positional correspondence relationship between the detection devices and the sub-electrodes, as well as the times when the electrical signal is detected by the detection devices, and computes easily sliding distance, sliding direction or sliding speed of the friction layer in accordance with the recorded information.

In addition, the vector displacement sensor according to the present invention may further comprise a divider resistance between each of the sub-electrodes and the isopotential, and the divider resistance is for adjusting electrical current and voltage between the sub-electrode and the isopotential. In particular, the divider resistance can be connected in parallel or in series with the detection device.

In particular, each of the sub-electrodes is connected to the same isopotential (for example, earth ground) through the divider resistance. A detection device is connected between each of the sub-electrodes and the divider resistance. When the sliding friction occurs between the lower surface of the friction layer provided on the moving object and the upper surfaces of the sub-electrodes while the friction area changes, the detection device will sense a position of the moving object in accordance with the detecting signal that is detected.

Displacement sensor is used to convert a mechanical displacement by means of potentiometer elements into a resistance or voltage output which is in a linear or arbitrary function relationship with the mechanical displacement. A vector displacement sensor is developed upon the displacement sensor. The vector displacement sensor is used to not only determine a direction of displacement of an object, but also determine position of displacement of the object. Conventional vector displacement sensor mainly is used to achieve accurate positioning of the displacement by means of resistance-varying mode or magnetostriction mode sensor. Power supplies from external power source are necessary for normal operations of these sensors. A vector displacement sensor which relies on external power supply is not easy to maintain in harsh environment, and also is hardy to be widely applied in future energy crisis. The vector displacement sensor which utilizes the generator of the present invention is a self-driven displacement sensor without involving external power supply. It not only is simple in structure and low in manufacture cost, but also fundamentally overcomes its dependence on external power supply, and may work in long-term and stably.

Correspondingly, the present invention also provides a method of power generation. The method comprises:
providing an electrode layer being electrically connected, via a load, to an isopotential; and
occurring a relatively sliding friction between a friction layer and the electrode layer while changing a friction area, such that electric current flows through the load.
wherein, there is a difference in triboelectric series between material for the friction layer and material for the electrode layer. Materials and structures of the referred friction layer and the electrode layer may be the same as those for the friction layer and the electrode layer of the generator according to the present invention, and it will not be repeated here.

Example 1, manufacture of a sliding-mode triboelectric generator.

A friction material layer of a device is obtained by cutting out a polytetrafluoroethylene film with a length of 10cm and a width of 5cm and a thickness of 1mm. An aluminium foil with a length of 10cm and a width of 5cm and a thickness of 25µm is secured, by an adhesive tape, onto an organic glass material substrate with the same size. A copper wire is used to connect the aluminium foil with a resistance, and the other end of the resistance is grounded. The polytetrafluoroethylene film is placed onto a surface of the aluminium foil. When, under the action of an external force, there occurs a relative sliding between the polytetrafluoroethylene and the aluminium foil and a friction area changes, output of a correpsonding electrical signal is obtained at a voltage meter connected at both ends of the resistance. It is explained that the sliding-mode triboelectric generator is able to convert a mechanical energy from an external force into an electrical energy, for power generation.

Example 2, manufacture of a sliding-mode triboelectric generator-based vector displacement sensor.

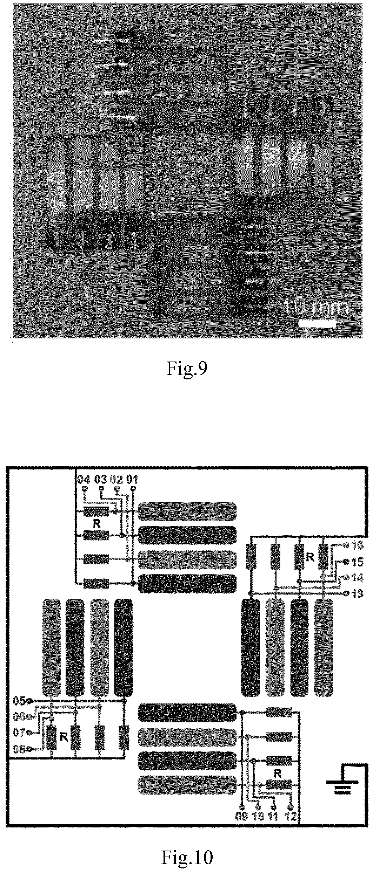

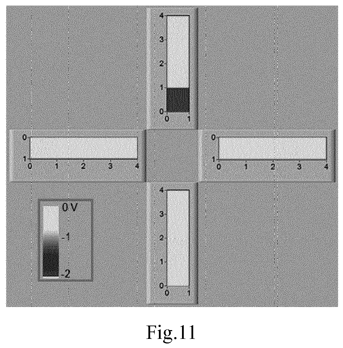

Material for a substrate of a sensor that utilizes a generator, is obtained by laser cutting out an organic glass with a length of 10cm and a width of 10cm and a thickness of 1.59mm. By a manner of magnetron sputtering, sixteen aluminum electrode strips, serving as the sub-electrodes each with a length of 3cm and a width of 10cm, are manufactured on the substrate. Distance between adjacent sub-electrodes is 2mm.The sixteen sub-electrodes are grouped as four groups and four constitute one group, in which the four groups form a cross configuration by distributing in four directions. The four first conductive units in each group are arranged in parallel and equidistantly, as shown in Fig. 9. Each of the aluminium electrode strips is connected via a copper wire to a divider resistance R, and the other end of the divider resistance is grounded. One output end 01······15, 16, for collection of electrical signals, is led between each of the aluminium electrode strips and the divider resistance, referring to details of the connection circuit in Fig. 10. The sixteen output ends are connected to the detection devices, respectively. Real time collection of the output signals from the sixteen first conductive units is obtained by the detection devices. A friction layer is obtained by cutting out a polytetrafluoroethylene film with a length of 2cm and a width of 2cm and a thickness of 1mm. The friction layer is placed in a blank in the middle of a pattern formed by a plurality of electrode strips. When it slides along any direction, the polytetrafluoroethylene film will have a relatively sliding friction against the electrode strips and a contacting area therebetween changes, so that an electrical signal is outputted to outside at the output end. Moreover, when an object containing the friction layer moves over the sensor, different sub-electrodes come into contact with the friction layer successively, so that electrical signals are outputted from different sub-electrodes to the outside. By means of analysis upon these signals, displacement direction and displacement position of the object will be obtained. Fig. 11 shows a data image obtained when it slides in a direction at 10mm. It can be seen clearly that a first sub-electrode above the central region is in contact with the friction layer disposed on the object.

The above embodiments indicate that displacement direction and displacement position of the object maybe determined upon collection of these signals at the output ends. The vector displacement sensor directly adopts a single electrode type sliding-mode triboelectric generator as a triggered sensor and requires no external power supply, and thereby it will work in long-term and stably. In addition, the vector displacement sensor according to the present invention allows the plurality of sub-electrodes to be in any shape as required, and also allows a large-scale arrangement of the sub-electrodes, and thereby it will applied easily in environments where power source is not easy to use, such as outdoors.

## Claims

1. A sliding-mode triboelectric generator, comprising:
a friction layer (100) and an electrode layer (200),:
a first surface of the friction layer (100) is provided to face to a first surface of the electrode layer (200);
wherein, an electrical signal is output between the electrode layer (200) and an isopotential (300) connected to the electrode layer, when a relative sliding occurs, under the action of an external force, between the first surface of the electrode layer (200) and the first surface of the friction layer (100) while a friction area of an interface between the first surface of the electrode layer (200) and the first surface of the friction layer (100) changes in the course of the sliding;
wherein there is a difference in triboelectric series between material for the first surface of the friction layer (100) and material for the first surface of the electrode layer (200),
wherein the friction layer is not electrically connected to the isopotential (300), and **characterized in that** the friction layer has a thickness greater than 1 mm.

2. The generator of claim 1, wherein the electrode layer (200) is connected, via a load (500), to be grounded or to an isopotential (300) circuit;
wherein the electrode layer (200) is electrically connected, via an external circuit that is connected in parallel with a load (500), to the isopotential (300).

3. The generator of claim 1 or 2, wherein the first surface of the electrode layer (200) is provided to be in contact with the first surface of the friction layer (100).

4. The generator of claim 1 or 2, wherein the electrode layer (200) does not come into contact with the friction layer (100) when no external force is applied, while, the first surface of the electrode layer (200) comes into contact with the first surface of the friction layer (100) when an external force is applied.

5. The generator of any one of claims 1-4, wherein material for the first surface of the friction layer (100) is selected from insulator material.

6. The generator of claim 5, wherein the insulator material is selected from polymeric material, wherein the polymeric material is selected from PMMA, nylon, polyvinyl alcohol, polyester, polyisobutylene, polyurethane sponge, polyethylene terephthalate, polyvinyl butyral, polychloroprene, natural rubber, polyacrylonitrile, poly phenol carbonate, polyetherchloride, polyvinylidene chloride, polystyrene, polyethylene, polypropylene, polyimide, polyvinyl chloride, polydimethylsiloxane, and polytetrafluoroethylene.

7. The generator of any one of claims 1-6, wherein material for the first surface of the electrode layer (200) is selected from metal, indium tin oxide, or organic conductor.

8. The generator of any one of claims 1-7, wherein the first surface of the electrode layer (200) and/or the first surface of the friction layer (100) are/is disturbed fully or partially with microstructure with a magnitude of nanometer, micrometer, or submicrometer, the microstructure comprising a structure of nanowire, nanotube, nanoparticle, nanorod, nano flower, nano groove, micron groove, nano cone, micron cone, nanosphere and micronsphere, and an array thereof, or, dots or coatings of nano materials.

9. The generator of any one of claims 1-8, wherein the first surface of the electrode layer (200) and/or the first surface of the friction layer (100) are/is chemically modified, wherein, in the first surface of the electrode layer (200) and/or the first surface of the friction layer (100), a functional group which is prone to lose electrons is introduced into a surface of a material having a positive rating in a triboelectric series, or a functional group which is prone to gain electrons is introduced into a surface of a material having a negative rating in the triboelectric series; or,
in the first surface of the electrode layer (200) and/or the first surface of the friction layer (100), positive charges are introduced into a surface of a material having the positive rating, and, negative charges are introduced into a surface of a material having the negative rating.

10. The generator of any one of claims 1-9, wherein the first surface of the electrode layer (200) is a flat surface or a curved surface; and/or,
the first surface of the friction layer (100) is a flat surface or a curved surface.

11. The generator of claim 10, wherein the first surface of the electrode layer (200) and the first surface of the friction layer (100) are surfaces which are complemented with each other.

12. The generator of any one of claims 1-11, wherein the first surface of the friction layer (100) is an uneven surface with concave-convex structure, and, the first surface of the electrode layer (200) is an uneven surface with concave-convex structure.

13. The generator of any one of claims 1-12, wherein the electrode layer (200) and/or the friction layer (100) are/is of soft material or rigid material; and/or
wherein the electrode layer (200) and/or the friction layer (100) are/is of elastic material

14. The generator of any one of claims 1-13, further comprising a substrate (500) on which the electrode layer (200) is disposed.

15. The generator of any one of claims 1-14, wherein the electrode layer (200) is formed of a plurality of sub-electrodes (231-234), each of the sub-electrodes (231-234) is electrically connected to the isopotential (300), and surfaces of the plurality of sub-electrodes (231-234) form the first surface of the electrode layer (200); an electrical signal is output between the sub-electrodes (231-234) and the isopotential (300) when a relative sliding occurs, under the action of an external force, between the surfaces of the sub-electrodes (231-234) and the first surface of the friction layer (100) while the friction area changes in the course of the sliding.

16. The generator of claim 15, wherein the first surface of the friction layer (100) is in contact with and rubs against the first surfaces of two adjacent ones of the sub-electrodes (231-234) asynchronously.

17. The generator of claim 15 or 16, wherein the sub-electrode has a shape of strip or square.

18. The generator of any one of claims 16-18, wherein the plurality of sub-electrodes (231-234) is arranged in a preset pattern.

19. The generator of any one of claims 1-14, wherein the friction layer (100) is formed of a plurality of friction units, and surfaces of the plurality of friction units form the first surface of the friction layer (100).

20. A vector displacement sensor comprising a generator of any one of claims 16-19, wherein,
the vector displacement sensor further comprises a detection device connected between each of the sub-electrodes (231-234) and the isopotential (300) and configured for detecting the electrical signal;
the vector displacement sensor is configured such that, when the sliding friction occurs between the first surface of the friction layer (100) and the first surface of the sub-electrodes (231-234) while the friction area changes, a position of the friction layer (100) is determinable in accordance with position of the detection device by which the electrical signal is detected, or, a sliding distance, a sliding direction or a sliding speed of the friction layer (100) is determinable in accordance with position of the detection device by which the electrical signal is detected successively.

21. The vector displacement sensor of claim 20, wherein the detection device is an electric current or electric voltage detecting device, and the electrical signal is an electric current or electric voltage signal; or
the detection device is a light-emitting element or a sounder element configured such that a light signal or a sound signal is output when the electrical signal is detected by the light-emitting element or the sounder element.

22. The vector displacement sensor of claim 20 or 21, further comprising a divider resistance between each of the sub-electrodes (231-234) and the isopotential (300), the divider resistance being connected in parallel or in series with the detection device.

23. A method of power generation, the method comprising:
occurring a relatively sliding friction between a friction layer (100) and an electrode layer (200) while changing a friction area of an interface between the first surface of the electrode layer (200) and the first surface of the friction layer (100), such that electric current flows through the load (500),
**characterized in that** the method further comprises providing the electrode layer (200) being electrically connected, via a load (500), to an isopotential (300), wherein only the electrode layer is electrically connected to the isopotential, and wherein the friction layer (100) has a thickness greater than 1mm.

## Patentansprüche

1. Triboelektrischer Gleitmodusgenerator, der Folgendes umfasst:
eine Reibungsschicht (100) und eine Elektrodenschicht (200);
wobei eine erste Oberfläche der Reibungsschicht (100) derart vorgesehen ist, dass sie einer ersten Oberfläche der Elektrodenschicht (200) zugewandt ist;
ein elektrisches Signal zwischen der Elektrodenschicht (200) und einem Isopotential (300), das mit der Elektrodenschicht verbunden ist, ausgegeben wird, wenn unter der Einwirkung einer äußeren Kraft zwischen der ersten Oberfläche der Elektrodenschicht (200) und der ersten Oberfläche der Reibungsschicht (100) ein relatives Gleiten auftritt, während ein Reibungsbereich einer Grenzfläche zwischen der ersten Oberfläche der Elektrodenschicht (200) und der ersten Oberfläche der Reibungsschicht (100) sich im Verlauf des Gleitens ändert;
eine Differenz der triboelektrischen Reihe zwischen einem Material für die erste Oberfläche der Reibungsschicht (100) und einem Material für die erste Oberfläche der Elektrodenschicht (200) vorhanden ist und
die Reibungsschicht mit dem Isopotential (300) elektrisch nicht verbunden ist, **dadurch gekennzeichnet, dass** die Reibungsschicht eine Dicke besitzt, die größer als 1 mm ist.

2. Generator nach Anspruch 1, wobei die Elektrodenschicht (200) über eine Last (500) mit Masse oder einer Schaltung für ein Isopotential (300) verbunden ist;
wobei die Elektrodenschicht (200) mittels einer externen Schaltung, die zu einer Last (500) parallelgeschaltet ist, mit dem Isopotential (300) elektrisch verbunden ist.

3. Generator nach Anspruch 1 oder 2, wobei die erste Oberfläche der Elektrodenschicht (200) derart vorgesehen ist, dass sie mit der ersten Oberfläche der Reibungsschicht (100) in Kontakt ist.

4. Generator nach Anspruch 1 oder 2, wobei die Elektrodenschicht (200) nicht mit der Reibungsschicht (100) in Kontakt gelangt, wenn keine äußere Kraft ausgeübt wird, während die erste Oberfläche der Elektrodenschicht (200) mit der ersten Oberfläche der Reibungsschicht (100) in Kontakt gelangt, wenn eine äußere Kraft ausgeübt wird.

5. Generator nach einem der Ansprüche 1-4, wobei ein Material für die erste Oberfläche der Reibungsschicht (100) aus einem Isolatormaterial gewählt ist.

6. Generator nach Anspruch 5, wobei das Isolatormaterial aus einem Polymermaterial gewählt ist und das Polymermaterial aus PMMA, Nylon, Polyvinylalkohol, Polyester, Polyisobutylen, Polyurethanschwamm, Polyethylenterephthalat, Polyvinylbutyral, Polychloropren, Naturkautschuk, Polyacrylnitril, Polyphenolkarbonat, Polyehteretherchlorid, Polyvinylidenchlorid, Polystyrol, Polyethylen, Polypropylen, Polyimid, Polyvinylchlorid, Polydimethylsiloxan und Polytetrafluorethylen gewählt ist.

7. Generator nach einem der Ansprüche 1-6, wobei ein Material für die erste Oberfläche der Elektrodenschicht (200) aus Metall, Indiumzinnoxid oder einem organischen Leiter gewählt ist.

8. Generator nach einem der Ansprüche 1-7, wobei die erste Oberfläche der Elektrodenschicht (200) und/oder die erste Oberfläche der Reibungsschicht (100) mit einer Mikrostruktur mit einer Nanometer-, Mikrometer- oder Submikrometermagnitude vollständig oder teilweise gestört sind und die Mikrostruktur eine Struktur eines Nanodrahts, eines Nanoröhrchens, eines Nanopartikels, eines Nanostäbchens, einer Nanoblüte, einer Nanonut, einer Mikronut, eines Nanokonus, eines Mikrokonus, eines Nanokügelchens und eines Mikrokügelchens und einer Anordnung davon oder von Punkten oder Beschichtungen aus Nanomaterialien umfasst.

9. Generator nach einem der Ansprüche 1-8, wobei die erste Oberfläche der Elektrodenschicht (200) und/oder die erste Oberfläche der Reibungsschicht (100) chemisch verändert sind, wobei in der ersten Oberfläche der Elektrodenschicht (200) und/oder der ersten Oberfläche der Reibungsschicht (100) eine Funktionsgruppe, die dazu neigt, Elektronen zu verlieren, in eine Oberfläche eines Materials eingebracht ist, das eine positive Einstufung in einer triboelektrischen Reihe aufweist, oder eine Funktionsgruppe, die dazu neigt, Elektronen hinzuzugewinnen, in eine Oberfläche eines Materials eingebracht ist, das eine negative Einstufung in der triboelektrischen Reihe aufweist; oder
in der ersten Oberfläche der Elektrodenschicht (200) und/oder der ersten Oberfläche der Reibungsschicht (100) positive Ladungen in eine Oberfläche eines Materials eingebracht sind, das die positive Einstufung aufweist, und negative Ladungen in eine Oberfläche eines Materials eingebracht sind, das die negative Einstufung aufweist.

10. Generator nach einem der Ansprüche 1-9, wobei die erste Oberfläche der Elektrodenschicht (200) eine flache Oberfläche oder eine gekrümmte Oberfläche ist und/oder die erste Oberfläche der Reibungsschicht (100) eine flache Oberfläche oder eine gekrümmte Oberfläche ist.

11. Generator nach Anspruch 10, wobei die erste Oberfläche der Elektrodenschicht (200) und die erste Oberfläche der Reibungsschicht (100) Oberflächen sind, die einander ergänzen.

12. Generator nach einem der Ansprüche 1-11, wobei die erste Oberfläche der Reibungsschicht (100) eine ungleichförmige Oberfläche mit konkav-konvexer Struktur ist und die erste Oberfläche der Elektrodenschicht (200) eine ungleichförmige Oberfläche mit konkav-konvexer Struktur ist.

13. Generator nach einem der Ansprüche 1-12, wobei die Elektrodenschicht (200) und/oder die Reibungsschicht (100) aus einem weichen Material oder einem starren Material sind und/oder
wobei die Elektrodenschicht (200) und/oder die Reibungsschicht (100) aus einem elastischen Material sind.

14. Generator nach einem der Ansprüche 1-13, der ferner ein Substrat (500) umfasst, an dem die Elektrodenschicht (200) angeordnet ist.

15. Generator nach einem der Ansprüche 1-14, wobei die Elektrodenschicht (200) aus mehreren Unterelektroden (231-234) gebildet ist, jede Unterelektrode (231-234) mit dem Isopotential (300) elektrisch verbunden ist und Oberflächen der mehreren Unterelektroden (231-234) die erste Oberfläche der Elektrodenschicht (200) bilden; wobei ein elektrisches Signal zwischen den Unterelektroden (231-234) und dem Isopotential (300) ausgegeben wird, wenn ein relatives Gleiten unter der Einwirkung einer äußeren Kraft zwischen den Oberflächen der Unterelektroden (231-234) und der ersten Oberfläche der Reibungsschicht (100) auftritt, während der Reibungsbereich sich im Verlauf des Gleitens ändert.

16. Generator nach Anspruch 15, wobei die erste Oberfläche der Reibungsschicht (100) mit den ersten Oberflächen von zwei benachbarten Unterelektroden (231-234) in Kontakt ist und gegen sie asynchron reibt.

17. Generator nach Anspruch 15 oder 16, wobei die Unterelektrode eine Form eines Streifens oder eines Quadrats besitzt.

18. Generator nach einem der Ansprüche 16-18, wobei die mehreren Unterelektroden (231-234) in einem voreingestellten Muster angeordnet sind.

19. Generator nach einem der Ansprüche 1-14, wobei die Reibungsschicht (100) aus mehreren Reibungseinheiten gebildet ist und Oberflächen der mehreren Reibungseinheiten die erste Oberfläche der Reibungsschicht (100) bilden.

20. Vektorverlagerungssensor, der einen Generator nach einem der Ansprüche 16-19 umfasst, wobei
der Vektorverlagerungssensor ferner eine Detektionsvorrichtung umfasst, die zwischen jeder der Unterelektroden (231-234) und dem Isopotential (300) verbunden ist und zum Detektieren des elektrischen Signals konfiguriert ist; und
der Vektorverlagerungssensor derart konfiguriert ist, dass dann, wenn die Gleitreibung zwischen der ersten Oberfläche der Reibungsschicht (100) und der ersten Oberfläche der Unterelektroden (231-234) auftritt, während der Reibungsbereich sich ändert, eine Position der Reibungsschicht (100) gemäß einer Position der Detektionsvorrichtung, durch die das elektrische Signal detektiert wird, bestimmbar ist oder eine Gleitentfernung, eine Gleitrichtung oder eine Gleitgeschwindigkeit der Reibungsschicht (100) gemäß der Position der Detektionsvorrichtung bestimmbar ist, durch die das elektrische Signal fortlaufend detektiert wird.

21. Vektorverlagerungssensor nach Anspruch 20, wobei die Detektionsvorrichtung eine Detektionsvorrichtung für elektrischen Strom oder elektrische Spannung ist und das elektrische Signal ein elektrisches Stromsignal oder ein elektrisches Spannungssignal ist oder
die Detektionsvorrichtung ein lichtemittierendes Element oder ein Schallgeberelement ist, das derart konfiguriert ist, dass ein Lichtsignal oder ein Schallsignal ausgegeben wird, wenn das elektrische Signal durch das lichtemittierende Element oder das Schallgeberelement detektiert wird.

22. Vektorverlagerungssensor nach Anspruch 20 oder 21, der ferner einen Teilerwiderstand zwischen jeder der Unterelektroden (231-234) und dem Isopotential (300) umfasst, wobei der Teilerwiderstand zur Detektionsvorrichtung parallelgeschaltet oder mit ihr in Reihe geschaltet ist.

23. Verfahren zur Leistungserzeugung, wobei das Verfahren Folgendes umfasst:
Bereitstellen einer relativ gleitenden Reibung zwischen einer Reibungsschicht (100) und einer Elektrodenschicht (200) während des Änderns eines Reibungsbereichs einer Grenzfläche zwischen der ersten Oberfläche der Elektrodenschicht (200) und der ersten Oberfläche der Reibungsschicht (100) derart, dass ein elektrischer Strom durch die Last (500) fließt,
**dadurch gekennzeichnet, dass** das Verfahren ferner das Bereitstellen der Elektrodenschicht (200) umfasst, die über eine Last (500) mit einem Isopotential (300) elektrisch verbunden ist, wobei lediglich die Elektrodenschicht mit dem Isopotential elektrisch verbunden ist und die Reibungsschicht (100) eine Dicke besitzt, die größer als 1 mm ist.

## Revendications

1. Générateur triboélectrique à mode de glissement, comprenant :
une couche de frottement (100) et une couche d'électrode (200) ;
dans lequel une première surface de la couche de frottement (100) est fournie pour faire face à une première surface de la couche d'électrode (200) ;
dans lequel un signal électrique est émis entre la couche d'électrode (200) et un isopotentiel (300) connecté à la couche d'électrode, lorsqu'un glissement relatif se produit, sous l'action d'une force externe, entre la première surface de la couche d'électrode (200) et la première surface de la couche de frottement (100) tandis qu'une zone de frottement d'une interface entre la première surface de la couche d'électrode (200) et la première surface de la couche de frottement (100) change au cours du glissement ;
dans lequel il y a une différence de série triboélectrique entre un matériau pour la première surface de la couche de frottement (100) et un matériau pour la première surface de la couche d'électrode (200),
dans lequel la couche de frottement n'est pas connectée électriquement à l'isopotentiel (300), et **caractérisé en ce que** la couche de frottement a une épaisseur supérieure à 1 mm.

2. Générateur selon la revendication 1, dans lequel la couche d'électrode (200) est connectée, par l'intermédiaire d'une charge (500), pour être mise à la terre ou à un circuit d'isopotentiel (300) ;
dans lequel la couche d'électrode (200) est connectée électriquement, par l'intermédiaire d'un circuit externe qui est connecté en parallèle à une charge (500), à l'isopotentiel (300).

3. Générateur selon la revendication 1 ou 2, dans lequel la première surface de la couche d'électrode (200) est fournie pour être en contact avec la première surface de la couche de frottement (100).

4. Générateur selon la revendication 1 ou 2, dans lequel la couche d'électrode (200) n'entre pas en contact avec la couche de frottement (100) lorsqu'aucune force externe n'est appliquée, tandis que la première surface de la couche d'électrode (200) entre en contact avec la première surface de la couche de frottement (100) lorsqu'une force externe est appliquée.

5. Générateur selon l'une quelconque des revendications 1 à 4, dans lequel un matériau pour la première surface de la couche de frottement (100) est choisi parmi un matériau isolant.

6. Générateur selon la revendication 5, dans lequel le matériau isolant est choisi parmi un matériau polymère, dans lequel le matériau polymère est choisi parmi le PMMA, le nylon, l'alcool polyvinylique, le polyester, le polyisobutylène, l'éponge de polyuréthane, le polytéréphtalate d'éthylène, le poly(butyral de vinyle), le polychloroprène, le caoutchouc naturel, le polyacrylonitrile, le polycarbonate de phénol, le polychlorure d'éther, le polychlorure de vinylidène, le polystyrène, le polyéthylène, le polypropylène, le polyimide, le polychlorure de vinyle, le polydiméthylsiloxane et le polytétrafluoroéthylène.

7. Générateur selon l'une quelconque des revendications 1 à 6, dans lequel le matériau pour la première surface de la couche d'électrode (200) est choisi parmi le métal, l'oxyde d'indium-étain, ou un conducteur organique.

8. Générateur selon l'une quelconque des revendications 1 à 7, dans lequel la première surface de la couche d'électrode (200) et/ou la première surface de la couche de frottement (100) sont/est perturbée(s) totalement ou partiellement avec une microstructure avec une amplitude de l'ordre du nanomètre, du micromètre, ou du submicromètre, la microstructure comprenant une structure de nanofil, nanotube, nanoparticule, nanotige, nanofleur, nanorainure, microrainure, nanocône, microcône, nanosphère et microsphère, et un réseau de ceux-ci, ou, des points ou revêtements de nanomatériaux.

9. Générateur selon l'une quelconque des revendications 1 à 8, dans lequel la première surface de la couche d'électrode (200) et/ou la première surface de la couche de frottement (100) sont/est modifiée(s) chimiquement, dans lequel, dans la première surface de la couche d'électrode (200) et/ou la première surface de la couche de frottement (100), un groupe fonctionnel qui est susceptible de perdre des électrons est introduit dans une surface d'un matériau ayant une notation positive dans une série triboélectrique, ou un groupe fonctionnel qui est susceptible de gagner des électrons est introduit dans une surface d'un matériau ayant une notation négative dans la série triboélectrique ; ou,
dans la première surface de la couche d'électrode (200) et/ou la première surface de la couche de frottement (100), des charges positives sont introduites dans une surface d'un matériau ayant la notation positive, et des charges négatives sont introduites dans une surface d'un matériau ayant la notation négative.

10. Générateur selon l'une quelconque des revendications 1 à 9, dans lequel la première surface de la couche d'électrode (200) est une surface plate ou une surface incurvée ; et/ou,
la première surface de la couche de frottement (100) est une surface plate ou une surface incurvée.

11. Générateur selon la revendication 10, dans lequel la première surface de la couche d'électrode (200) et la première surface de la couche de frottement (100) sont des surfaces qui sont complétées l'une avec l'autre.

12. Générateur selon l'une quelconque des revendications 1 à 11, dans lequel la première surface de la couche de frottement (100) est une surface irrégulière avec une structure concave-convexe, et la première surface de la couche d'électrode (200) est une surface irrégulière avec une structure concave-convexe.

13. Générateur selon l'une quelconque des revendications 1 à 12, dans lequel la couche d'électrode (200) et/ou la couche de frottement (100) sont/est en matériau souple ou en matériau rigide ; et/ou dans lequel la couche d'électrode (200) et/ou la couche de frottement (100) sont/est en matériau élastique.

14. Générateur selon l'une quelconque des revendications 1 à 13, comprenant en outre un substrat (500) sur lequel la couche d'électrode (200) est disposée.

15. Générateur selon l'une quelconque des revendications 1 à 14, dans lequel la couche d'électrode (200) est formée d'une pluralité de sous-électrodes (231-234), chacune des sous-électrodes (231-234) est connectée électriquement à l'isopotentiel (300), et des surfaces de la pluralité de sous-électrodes (231-234) forment la première surface de la couche d'électrode (200) ; un signal électrique est émis entre les sous-électrodes (231-234) et l'isopotentiel (300) lorsqu'un glissement relatif se produit, sous l'action d'une force externe, entre les surfaces des sous-électrodes (231-234) et la première surface de la couche de frottement (100) tandis que la zone de frottement change au cours du glissement.

16. Générateur selon la revendication 15, dans lequel la première surface de la couche de frottement (100) est en contact avec et frotte contre les premières surfaces de deux sous-électrodes adjacentes des sous-électrodes (231-234) de manière asynchrone.

17. Générateur selon la revendication 15 ou 16, dans lequel la sous-électrode a une forme de bande ou de carré.

18. Générateur selon l'une quelconque des revendications 16 à 18, dans lequel la pluralité de sous-électrodes (231-234) est agencée dans un schéma prédéfini.

19. Générateur selon l'une quelconque des revendications 1 à 14, dans lequel la couche de frottement (100) est formée d'une pluralité d'unités de frottement, et des surfaces de la pluralité d'unités de frottement forment la première surface de la couche de frottement (100).

20. Capteur de déplacement vectoriel comprenant un générateur selon l'une quelconque des revendications 16 à 19, dans lequel,
le capteur de déplacement vectoriel comprend en outre un dispositif de détection connecté entre chacune des sous-électrodes (231-234) et l'isopotentiel (300) et configuré pour détecter le signal électrique ;
le capteur de déplacement vectoriel est configuré de telle sorte que, lorsque le frottement de glissement se produit entre la première surface de la couche de frottement (100) et la première surface des sous-électrodes (231-234) tandis que la zone de frottement change, une position de la couche de frottement (100) peut être déterminée en fonction de la position du dispositif de détection par lequel le signal électrique est détecté, ou, une distance de glissement, une direction de glissement ou une vitesse de glissement de la couche de frottement (100) peut être déterminée en fonction de la position du dispositif de détection par lequel le signal électrique est détecté de manière successive.

21. Capteur de déplacement vectoriel selon la revendication 20, dans lequel le dispositif de détection est un dispositif de détection de courant électrique ou de tension électrique, et le signal électrique est un signal de courant électrique ou de tension électrique ; ou
le dispositif de détection est un élément électroluminescent ou un élément sonore configuré de telle sorte qu'un signal lumineux ou un signal sonore est émis lorsque le signal électrique est détecté par l'élément électroluminescent ou l'élément sonore.

22. Capteur de déplacement vectoriel selon la revendication 20 ou 21, comprenant en outre une résistance de division entre chacune des sous-électrodes (231-234) et l'isopotentiel (300), la résistance de division étant connectée en parallèle ou en série avec le dispositif de détection.

23. Procédé de génération d'énergie, le procédé comprenant :
la production d'un frottement relativement glissant entre une couche de frottement (100) et une couche d'électrode (200) pendant un changement d'une zone de frottement d'une interface entre la première surface de la couche d'électrode (200) et la première surface de la couche de frottement (100), de telle sorte qu'un courant électrique circule à travers la charge (500),
**caractérisé en ce que** le procédé comprend en outre la fourniture de la couche d'électrode (200) qui est connectée électriquement, par l'intermédiaire d'une charge (500), à un isopotentiel (300), dans lequel seule la couche d'électrode est connectée électriquement à l'isopotentiel, et dans lequel la couche de frottement (100) a une épaisseur supérieure à 1 mm.
